# EUROPEAN PATENT SPECIFICATION

(11) **EP 2 411 203 B1**
(45) Date of publication and mention of the grant of the patent: **06.01.2016**
(21) Application number: 10710325.1
(22) Date of filing: 24.03.2010
(51) Int. Cl.: B29C 65/00, B29C 65/02, B31B 19/64, B31B 19/86, B31B 23/00, B29L 31/00, B29C 65/06, B29C 65/18, B29C 65/48, B29C 65/56

(54) **A PROCESS OF MAKING BAGS**
VERFAHREN ZUR HERSTELLUNG VON BEUTELN
PROCÉDÉ DE FABRICATION DE SACS

(30) Priority: 26.03.2009 DK 200900415; 26.03.2009 US 211186 P
(43) Date of publication of application: 01.02.2012
(73) Proprietor: Roll-o-Matic A/s, 5000 Odense C (DK)
(72) Inventor: JENSEN, John Buk, DK-5330 Munkebo (DK)
(74) Representative: Zacco Denmark A/S
(86) International application number: PCT/EP2010/053818
(87) International publication number: WO 2010/108944

(56) References cited:
- EP-A1- 0 323 808
- FR-A1- 2 580 592
- US-A- 2 815 063

## Description

The present invention relates to process of making bags from a tubular film.

The process comprising the steps of:
- providing a tubular film with side gussets,
- then folding the tubular film over a longitudinal axis thereof such that the tubular film constitute 2×4 layers of film,
   followed by, in an arbitrary sequence, the steps of:
- providing the tubular film with a first separation line to define handles of the bag,
- providing the tubular film with a second separation line, forming a severance line of the bag,
- providing the tubular film with a first transverse weld, constituting a top end weld, ahead of the second separation line, and a second transverse weld, constituting a bottom end weld, behind of the second perforation line.

### Background

Plastic bags such as plastic bags used for holding trash and plastic bags typically found in vegetable departments of supermarkets and the like are typically manufactured from a tube of plastic material such as tubular film. The tubular film is often produced by extruding the plastic material into an "endless" length of the tubular film. The tubular film is subsequently processed into the final product, either in the form of a roll or a bundle of bags or as loose and single bags typically packed either in a box or in another bag.

Manufacturers of such bags continuously seek to set up processes of making plastic bags wherein production cost incl. consumption of materials used in the process are minimized.

Accordingly, this invention relates to improvements in the process of making bags, in particular plastic bags of the type generally known as T-shirt bags, which is a type of bag formed with unitary handles also being suitable for closing the bag simply by tying the handles to form a knot.

The name "T-shirt bag" stem from the impression rendered by the handles of an unfolded bag which, to a certain extent, resemble the shoulder straps of a t-shirt.

Only the type of plastic bag generally known as the T-shirt bag is mentioned in this specification, however the method of manufacture according to the present invention is not in any way limited to this particular embodiment of plastic bags.

### Background art

US 2008/0063317 A (Tracy et al.) describe a roll of T-shirt plastic bags having integral handles which can also be used to close the bags. The bags are formed as a continuous web of folded and flattened bags each joined to a longitudinally contiguous bag by a perforated severance line. The handles are defined by a cut-out region so that separation of the bags is effected by tearing a line of perforations only across a relatively short length.

US 4759742 B (Achelpohl) teaches a process of making T-shirt bags from a flat tubular film. The film is provided with gussets and top end seam welds which close the gusset portions and form handle loops. Cut outs, similar to the neckline of a T-shirt, are provided and extend through the inner creases of the side gussets. The tubing is then folded on itself about its longitudinal centre line and is thereafter provided with bottom end seam welds joining the plies. Prior to folding the tubular film on itself about its longitudinal centre line, the portions of tubular film which are subsequently provided with the top end seam welds, are provided with layers of a release agent which extend across the web and prevent a weld of the web. The tubular film is subsequently folded on itself so that the release agent layers lie on each other. The tubular film which has been folded is subsequently provided with the top end and bottom end seam welds.

GB 1162540 A (Windmöller & Hölscher) describe a method of manufacturing plastic bags having U-shaped handles folded from flat strips such that the hand grip portions lie to the same side of their associated depending limbs whereby the hand grips may nest one within the other. The handles are welded to the inner or outer faces of the bag walls. The bag may have welded side seams or bottom seams, and the bag may include bottom gussets, side gussets and an infolded rim. The bags may be formed from an intermittently advanced web in the form of a flattened plastics tube. The bag may be manufactured by a bag forming apparatus wherein a tubular web is drawn intermittently by a pair of rollers through a perforating station in which the nest position of the web produces a tear line across the web. The plies pass on opposite sides of a mandrel and optionally past a side gusset forming device. Handles are successively positioned at a welding station to be secured to the respective lower and upper plies of the web in the rest condition. The handles are cut into strip form by rolls and bent into U-shape as they are advanced to the welding station. A further welding station produces a seam weld across the leading end of the web which is to form the bottom of a bag. Immediately after stopping of the web, the preceding bag is further advanced by pull-off rollers to separate the bag with its attached handles from the web at a tear line. In an alternative bag-forming apparatus according to this disclosure, the web comprises a folded over strip and the handles are welded to the overlying free edges of the strip, and the web being subsequently cut transversely and seam welded to form a bag with side seams. The handles may be formed simultaneously as a nested pair and are secured to web in the nested condition. In a further bag-forming apparatus a nested pair of handles is passed through a pair of slits formed in the upper ply only at a tear line. The handles are separated by a non weld able layer or are pretreated to prevent a welding together of the handles. In one form of apparatus for folding a handle strip into U-shape, flaps are pivoted to a support plate about axes and inclined at 45 degrees to the longitudinal axis of the strip to fold the strip ends over the edges of bars which are pivoted in a block to swing out of the folds when a bag is further advanced. In a further folding apparatus a central, strip-supporting plate is lowered together with folding bars as the strip ends are folded over the bars by reciprocated tongues. A further folding apparatus provides means for gripping a handle strip adjacent the points at which it is to be folded, the gripping means being simultaneously moved towards each other and rotated in the plane of the strip.

US 4931033 A (Leeds) disclose a method of making plastic bags in an in-line production stream having hand holes reinforced by double ply plastic material in which the molecular orientation of the plastic material extends across the bags and generally parallel to the upper ends of the bags. The method includes forming a longitudinal gusset along the upper ends of the bags in the machine direction of the plastic extrusion, slitting the inner fold line of the gusset, sealing the inner slit ends longitudinally to the adjacent front and back walls of the bags, forming transverse seals to close the side edges of the bags and separating the bags along the transverse seals.

### Brief description of the invention

The present invention represents an improved process of making plastic bags. Particularly, the invention relates to an improved process of making plastic bags of the abovementioned T-shirt type.

The object of the present invention is to set forth a process allowing V-folding of a sub product of a bag at an early stage of the preparation process such that all folding steps of the sub product, prior to welding or unifying top and bottom portions, are finalized without requiring and/or consuming additional materials, such as non stick coatings or barriers preventing unintended joining of layers of the sub product, to be permanently applied to the product.

Up to this day, prior art has failed to teach a process which in a simple, reliable and inexpensive manner, and without substantially increasing the cost of the production line, is able to set forth a process meeting the abovementioned sought process of setting up a processes of making plastic bags wherein production cost incl. consumption of materials used in the process are minimized.

According to the invention, the above object is achieved by the provision of a process as per the introductory part of this specification, and in particular upon configuring the process such that the process further comprise a step of, after folding the tubular film over a longitudinal axis and prior to providing the tubular film with a transverse weld, interposing between the 2×4 layers of film, a barrier such that four layers of film are disposed on a first side of the barrier and four other layers of film are disposed on a second side of the barrier, the barrier being such that a transverse weld obtained through the welding does not connect the four layers of film on the first side of the barrier with the other four layers of film on the second side of the barrier.

The above process allows for, at an early stage of the process, V-folding the sub product and subsequently finalizing the product, inter alia by means of heat sealing without requiring additional materials, such as non stick coatings or barriers preventing unintended joining of layers of sub product, is applied to the product.

According to one embodiment, the tubular film is advanced or conveyed through a plurality of stations performing the steps of the process according to the present invention.

According to one embodiment, the barrier constitutes a band being moved at least partially through a weld station.

According to one embodiment, the band constitutes tape comprising nonstick properties such as Teflon tape or equivalent.

According to one embodiment, the barrier constitutes a tape arranged to circulate in a loop.

According to one embodiment, detection means may be provided for registering a number of layers of film disposed on one side of the barrier. The detection means may be configured such that, in the event that the 2x4 layers not are being disposed as 4 layers on each side of the barrier, the manufacturing process may be stopped or alternatively, an alert released whereby the attention of an operator is called. The detection means constitute transillumination means or alternatively, the detection means may constitute physical measuring means or X-ray means or equivalent.

According to one embodiment, the barrier is, upon finalization of the steps of welding, removed from the film.

According to one embodiment, the second separation line forming the severance line is overlying a portion of the first separation line defining handles of the bag.

According to one embodiment, the film is, under the entire process, under conveyance.

According to one embodiment, the folding of the film over a longitudinal axis constitutes a V-fold.

According to one embodiment, the barrier is conveyed or advanced together with the film through a weld station wherein the transverse top end weld is provided.

According to one embodiment, the weld is/are performed by a weld apparatus which at least partially is conveyed together with the film.

According to one embodiment, the process further comprises the step of removing a section of multilayered film outlined by the first separation line defining handles of the bag

According to one embodiment, the separation lines constitute perforations produced under a process of making a line of holes.

According to one embodiment, the perforations extend through all layers of film.

According to one embodiment, the second separation line, forming a severance line of the bag, is oriented substantially transverse to the longitudinal axis of the film.

According to one embodiment the barrier may be obtained by treating one of the layers facing a gap defined by the 2x4 layers of film with a treatment rendering the layers not connectable by welding. The treatment may ensure that a transverse weld obtained through the welding does not connect the four layers of film on the first side of the barrier with the other four layers of film on the second side of the barrier. According to a further embodiment, the treatment may be applied to both of the layers facing the gap defined by the 2×4 layers of film. The treatment applied onto the layer or layers facing the gap defined by the 2×4 layers may constitute electrostatic inactivation rendering the layers of film not connectable by welding. The electrostatic inactivation may be performed by a dedicated station performing the electrostatic inactivation at one or more stages of the manufacturing process, e.g. subsequent the steps of folding the sub-product.

According to one embodiment, the process further comprises the step of rolling up the processed film.

According to one embodiment, a bag manufactured according to the process of making bags is provided.

### Brief description of the drawings

Figure 1 is a principal top plan view of a process of making bags.
Figure 2 is a sectional view along the line A-A in figure 1.
Figure 3 is a sectional view along the line B-B in figure 1.
Figure 4 is a sectional view along the line C-C in figure 1.
Figure 5 is a sectional view along the line D-D in figure 1.
Figure 6 is a plan view of a T-shirt bag.
Figure 7 is a principal top plan view of a process of making bags.
Figure 8 is a principal top plan view of a process of making bags.
Figure 9 is a principal top plan view of a process of making bags.

### Detailed description with reference to the figures

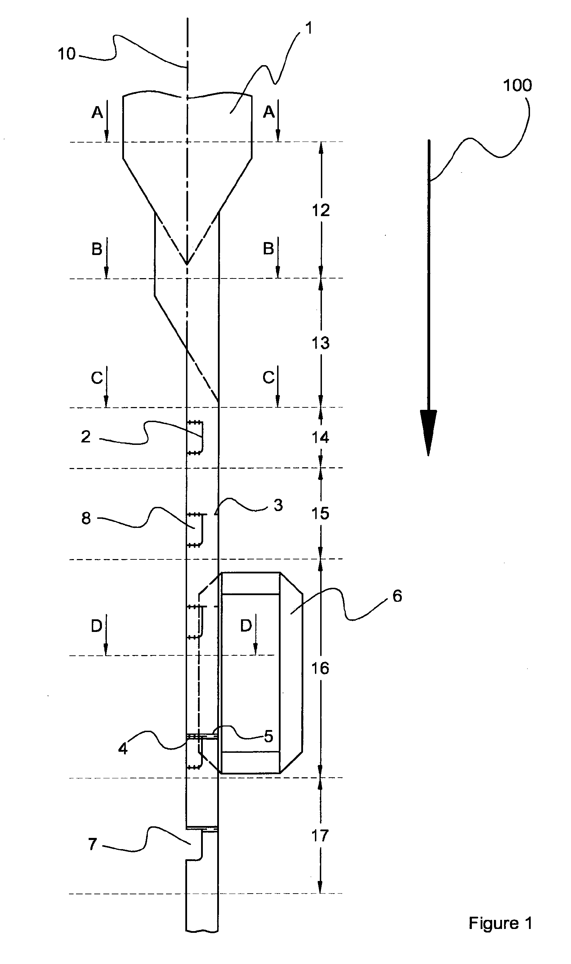

As shown in figure 1, which is schematic top plan view of a process of making bags, a strip of tubular film or sub product 1, having a central longitudinal axis 10, is conveyed, moved stepwise or advanced in a direction illustrated by the arrow 100.

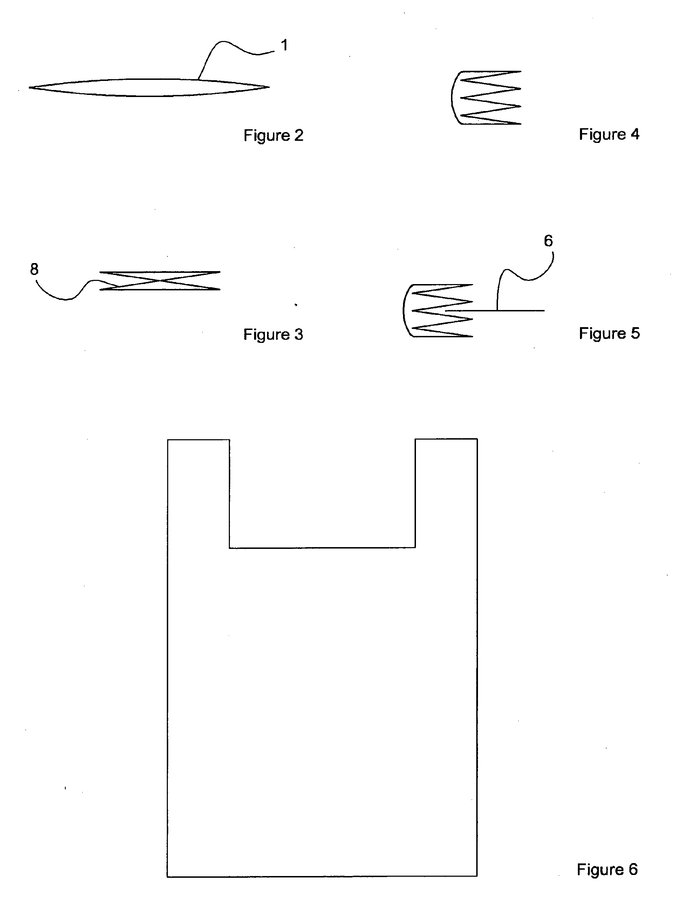

The sub product 1 has, when supplied to the process, a cross section according to figure 2.

The sub product 1 may be produced by extrusion in a not shown process immediately before entering the illustrated process or, as an equal alternative, be supplied to the process in the form of prefabricated tubular film unrolled from a roll or equivalent.

In a section of the process referred to under numeral 12, the sub product 1 is provided with side gussets which basically is made by tucking the sides of the tubular film 1 inwards in order to form two inwards folds reducing the width of the sub product by approximately one half.

Upon leaving the section referred to by numeral 12, the sub product 1 has a cross section according to figure 3.

In the section of the process referred to under numeral 13, the sub product 1 is V-folded such that the aforementioned gussets established under section 12 are arranged on top of each other, whereby the width of the sub product is reduced to about one fourth of the width of the sub product initially supplied to the process. The V-fold results in the sub product being folded into eight layers of material.

Upon leaving the section referred to by numeral 13, the sub product 1 has a cross section according to figure 4.

In the section of the process referred to under numeral 14, the sub product 1 is provided with a first perforation or separation line 2, which in the final product substantially outlines the handles of the bag. The perforation or separation line 2 is provided such that the layers of film, bounded by the perforation line 2, for stability reasons etc. are maintained within the sub product. Although the separation line 2 is shown as constituting an orthogonal separation line, this is not in any way essential for the process according to the present invention. The perforation may as desired take any alternative form such as a curved form or equivalent. According to one embodiment, the first separation line outlines the neckline of a T-shirt.

In the section of the process referred to under numeral 15, the sub product is provided with a serration line in the form of a second separation line or perforation 3, arranged substantially transverse to the longitudinal axis 10. As can be seen in figure 1, the second separation line 3 may be provided in addition to the abovementioned first separation line 2 defining the handles of the bag; however the second separation line may equally be provided as a continuation of a transverse part of the first separation line 2 defining the handles of the bag.

All perforations well as serration lines extend through all layers of film.

In the section of the process referred to under numeral 16, a barrier 6 is interposed between the forth and fifth layer of film such as can be seen in the sectional view according to figure 5.

The barrier serves to prevent one or more of the four layers of film disposed on one side of the barrier 6 in, under later stages of the process, connecting with the one or more of the four layers of film disposed on the other side of the barrier 6. The later stages of the process may constitute unifying one or more layers of film by means of application of heat, such as any type of welding process utilizing heated members or vibration (friction) welding techniques, or unifying by means of gluing, stapling or the like.

To summarize, the barrier serves to prevent the four layers of film disposed on one side of the barrier 6 in merging, e.g. under weld processes applied later on in the process, with the four layers of film disposed on the other side of the barrier 6.

Preferably, the barrier 6, or a part of the barrier 6, follows the sub product during conveyance, such that the barrier 6 is substantially stationary with respect to the sub product.

In processes wherein the product is stepwise conveyed through the stations of the process, the barrier 6 may also be configured for stepwise conveyance.

The barrier 6 may be arranged as a tape following a part of the conveyance of the sub product.

As may be derived from the figure, the tape may constitute a looped tape, guided by a number of not shown pulleys, guide wheels or guide plates with or without rollers etc., adapted to, e.g. by means of forces stemming from the conveyance of the sub product, be drawn around in the loop, i.e. the loop is "freewheeling". Drawing the tape around the loop by means of the forces stemming from the conveyance of the sub product may require arranging friction increasing pressure rollers or equivalent, such that the sub product is urged against the tape, whereby sufficient force may be transferred to the tape.

Alternatively, the loop of tape may be driven by means of power applied from dedicated arrangements, such as a set of opposed wheels pulling the tape around the in the loop. In configurations wherein the tape is not drawn by the conveyance of the sub product, measures may be taken in order to synchronize the speed of the tape with the speed of the conveyance of the sub product. The measures for synchronizing the speed may suitable be taken by electronic control systems inter alia comprising speed sensors adapted to sense the speed of the sub product and, by means of processing means or equivalent, govern the speed of a motor drawing the tape around in the loop.

The tape may constitute Teflon tape or similar tape or band showing non-stick properties. According to one embodiment, the tape constitutes a base tape covered with one or more layers of Teflon or equivalent.

While the barrier 6 is interposed between the forth and fifth layer of film, the sub product may be provided with a top end weld 4, ahead of the perforation 3, as well as a bottom end weld 5 behind the perforation 3. The welds 4 and 5 may be provided simultaneously.

Although not shown in the figures, the welds may be provided from weld equipment arranged above and below the sub product such that all eight layers of film, separated by the barrier 6 interposed between the fourth and fifth layer, are connected by welding, i.e. forming two bundles of film each comprising four layers of film.

The method of weld may constitute melt weld by means of heated weld irons or, as an equal alternative, weld by means of friction generated heat where the heat is generated by vibrations.

Upon completing the steps of weld, the barrier 6 is removed from the sub product.

Although not shown in the figures, the barrier may equally constitute leafs or blades or even thin bars being conveyed, possibly stepwise, along with the sub product, of course still showing non-stick properties, e.g. being provided with one or more coats comprising Teflon or equivalent. In processes wherein such relatively stiff barriers are applied, alternative measures may be taken in order to interpose as well as remove the barrier in relevant stages of the process, i.e. interposing the barrier before entry into a weld station, and upon finalization of the weld process, remove the barrier from the sub product. Interposing as well as removing the barrier from the sub product may be performed by means of any suitable device such as a robot or similar. Further, such non-tape barrier may constitute a stationary barrier arranged such that the layers of film to be separated by the barrier automatically are divided by the stationary barrier.

In the section of the process referred to under numeral 17, which is an optional step of the process of making bags, the piece of film 7 outlined by the perforation outlining said neckline of a T-shirt in section 14 is removed from the sub product.

Upon leaving the section referred to under numeral 17, or alternatively the section referred to under numeral 16, the sub product constitutes a final strip of T-shirt bags, which may, prior to packing, either be separated into single bags and packed and/or bundled, or be rolled into rolls comprising a suitable number of bags.

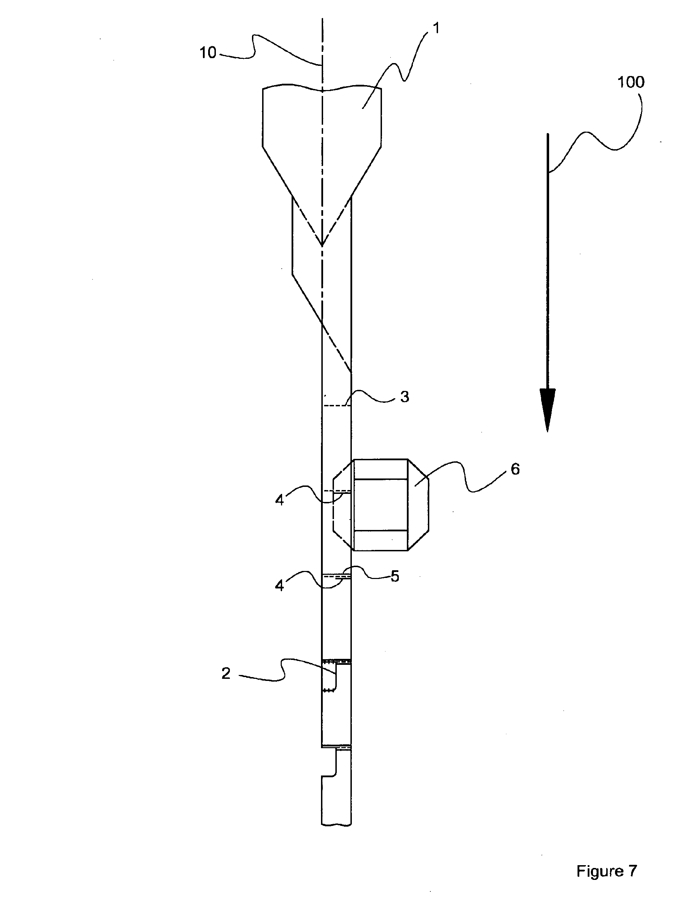

The above exposition describes subsequent steps of the process. The sequence of the steps may differ, although equally to the sequence as per the above and figure 1, such as illustrated in the figures 7, 8 and 9.

As illustrated in figure 7, the steps of folding the tubular film into a sub product constituting 8 layers of film is similar to the process as described above and with respect to figure 1. According to figure 7, a separation or serration line 3 may be provided prior to the sub product entering a welding station wherein a top end weld 4, defining an upper portion of the handles of the bag, is provided after interposing a barrier 6 between the 2x4 layers of film. As can be seen in the figure, after removal of the barrier 6, a bottom end weld 5 may be provided such that all eight layers of film are connected through the applied weld.

Following the welding processes, a separation or serration line 2, outlining the handles of the bag, may be provided, possibly by stamping or punching out. This step may equally encompass removal of the film outlined by the line 2, however according to the figure; the removal of excess film is in this embodiment of the process carried out at a subsequent step. Alternatively, the excess film is not removed under the process, .i.e. that the consumer may at convenience remove the film already outlined under the above process.

The finalized product is either wind up on a spool, packed as interleaved bags or packed as separated and possibly solitary bags.

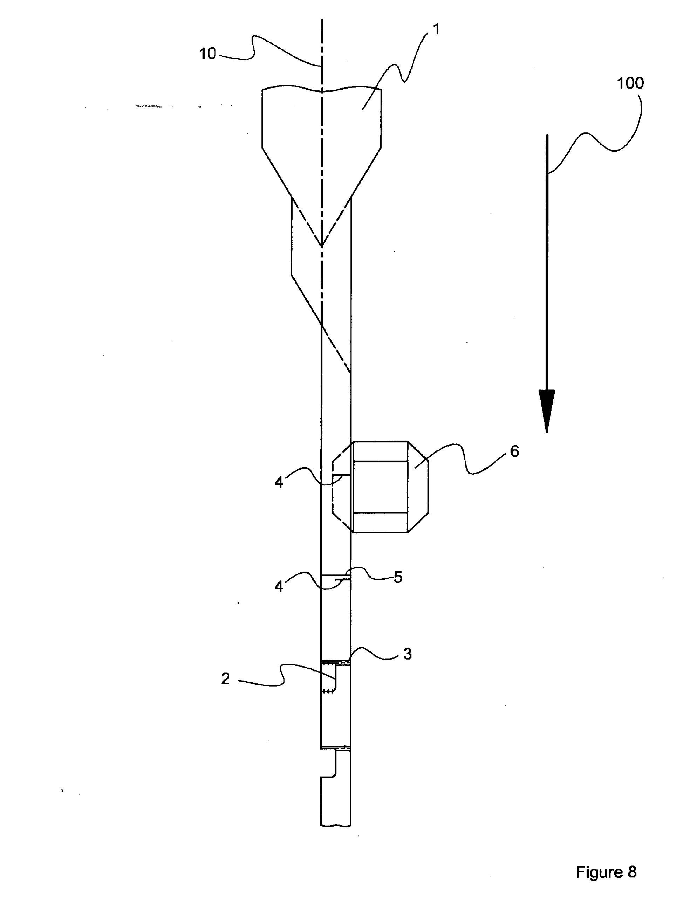

Figure 8 illustrates an embodiment wherein the first step, following the steps of folding the tubular film 1 into a sub-product constituting eight layers of film, is a step of establishing a top end weld 4, defining an upper portion of the handles of the bag, again after interposing a barrier 6 between the 2x4 layers of film. Upon the barrier 6 being removed from the sub product, a bottom end weld 5 is provided such that all eight layers of film are connected through the applied weld.

Subsequent steps of establishing serration or separations lines are provided upon finalization of the steps of welding and the finalized product is either wind up on a spool, packed as interleaved bags or packed as separated and possibly solitary bags.

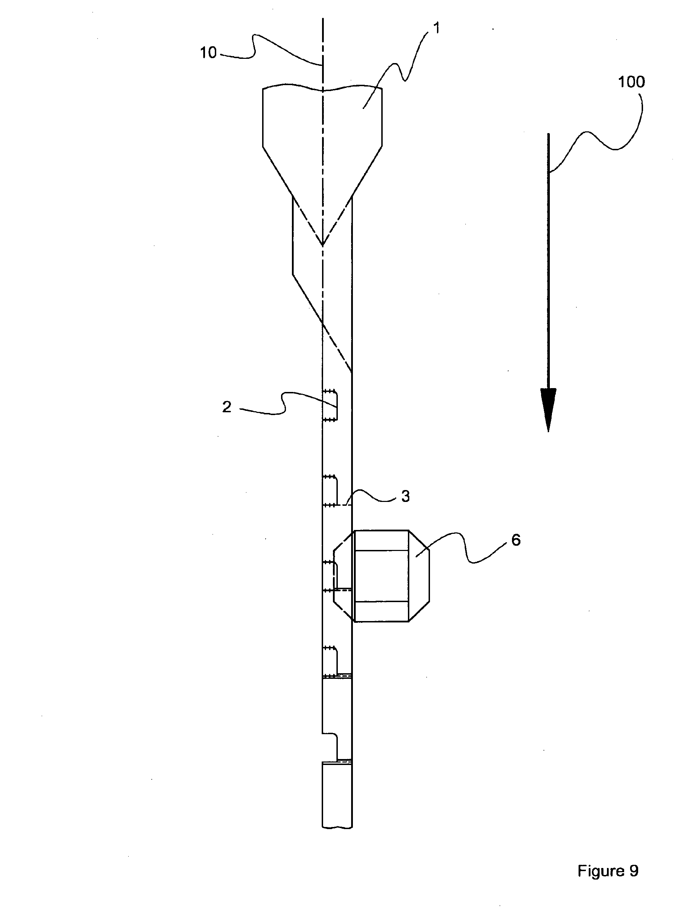

Figure 9 illustrates an embodiment wherein the first step, following the steps of folding the tubular film 1 into a sub-product constituting eight layers of film, is a step of providing a separation or serration line 2, outlining the handles of the bag, possibly by stamping or punching out. This step may equally encompass removal of the film outlined by the line 2, however according to the figure; the removal of excess film is in this embodiment of the process carried out at a subsequent step. Alternatively, the excess film is not removed under the process, .i.e. that the consumer may at convenience remove the film already outlined under the above process.

Following provision of the line 2, a separation or severance line 3 is provided, extending through all eight layers of film. Following the steps of applying the lines 3 and 4, a top end weld 4, defining an upper portion of the handles of the bag, is provided, again after interposing a barrier 6 between the 2×4 layers of film. Finally, after removal of the barrier 6, a bottom end weld 5 is provided such that all eight layers of film are connected through the applied weld.

The finalized product is again either wind up on a spool, packed as interleaved bags or packed as separated and possibly solitary bags

As is clear from the above exposition, the present invention is not in any way limited a particular sequence of steps of welding as well as steps of forming separation or serration lines.

Although the described and depicted embodiments suggest one orientation of the bags being processed, i.e. conveyance of the sub product with either the handles or the bottom facing the last step of the process, this may not in any way be considered as a requirement or a limitation for the present invention. The orientation of the bags may be selected at convenience.

In the above exposition, required means for carrying out the various steps of the process of making bags are, in order to set forth a concise specification, not necessarily mentioned within this specification.

The expression "a perforation" is throughout this specification incl. claims meant to denote a separation line produced under a process of making a line of holes. A perforation facilitates separation of two pieces of film divided by a perforation line.

The expression "a severance line" is throughout this specification incl. claims meant to denote a perforation provided in order to facilitate separation of a strip of bags into solitary bags.

It should be emphasized that the term "comprises/comprising/comprised of" when used in this specification is taken to specify the presence of stated features, integers, steps or components but does not preclude the presence or addition of one or more other features, integers, steps, components or groups thereof.

## Claims

1. A process of making bags from a tubular film (1), said process comprising the steps of:
- providing said tubular film (1) with side gussets (8),
- then folding said tubular film (1) over a longitudinal axis (10) thereof such that said tubular film (1) constitute 2×4 layers of film,
followed by, in an arbitrary sequence, the steps of:
- providing said tubular film (1) with a first separation line (2) to define handles of said bag,
- providing said tubular film (1) with a second separation line (3), forming a severance line of said bag,
- providing said tubular film (1) with a first transverse weld (4), constituting a top end weld, ahead of said second separation line (3), and a second transverse weld (5), constituting a bottom end weld, behind of said second perforation line (3),
**characterized in** said process further comprises a step of, after folding said tubular film (1) over a longitudinal axis (10) and prior to providing said tubular film (1) with a transverse weld, interposing between said 2×4 layers of said film a barrier (6) such that four layers of film are disposed on a first side of said barrier (6) and four other layers of said film are disposed on a second side of said barrier (6), said barrier (6) being such that a transverse weld obtained through said welding does not connect the four layers of film on the first side of said barrier (6) with the other four layers of said film on the second side of said barrier (6).

2. The process of making bags according to claim 1, wherein said tubular film (1) is advanced or conveyed through a plurality of stations performing the steps according to claim 1.

3. The process of making bags according to claim 2, wherein said barrier (6) constitutes a band being moved at least partially through a weld station.

4. The process of making bags according to claim 3, wherein said band constitutes tape comprising nonstick properties such as Teflon tape or equivalent.

5. The process of making bags according to any one of the preceding claims, wherein said barrier (6) constitutes a tape arranged to circulate in a loop.

6. The process of making bags according to any of the preceding claims, wherein detection means are provided for registering a number of layers of film disposed on one side of said barrier.

7. The process of making bags according to claim 6, wherein said detection means constitute transillumination means.

8. The process of making bags according to any of the preceding claims, wherein said barrier (6) is, upon finalization of said steps of welding, removed from said film (1).

9. The process of making bags according to any of the preceding claims, wherein said provision of said second separation line (3) forming said severance line (3) is overlying a portion of said first separation line (2) defining handles of said bag.

10. The process of making bags according to any of the preceding claims, wherein said film (1) under the entire process is under conveyance.

11. The process of making bags according to any of the preceding claims, wherein said folding of said film (1) over a longitudinal axis (10) constitutes a V-fold.

12. The process of making bags according to any one or more of the preceding claims wherein said barrier (6) is conveyed or advanced together with said film (1) through a weld station wherein said transverse top end weld (4) is provided.

13. The process of making bags according to any of the preceding claims wherein said weld is/are performed by a weld apparatus which at least partially is conveyed together with said film (1).

14. The process of making bags according to any of the preceding claims, wherein said process further comprises the step of removing a section of multilayered film (7) outlined by said first separation line (2) defining handles of said bag

15. The process of making bags according to any of the preceding claims, wherein said separation lines (2), (3) constitute perforations produced under a process of making a line of holes.

16. The process of making bags according to claim 12 wherein said perforations extend through all layers of film.

17. The process of making bags according to any of the preceding claims, wherein said second separation line (3), forming a severance line of said bag, is oriented substantially transverse to said longitudinal axis (10).

18. The process of making bags according to claim 2, wherein said barrier is obtained by treating one of the layers facing a gap defined by said 2×4 layers of said film with a treatment rendering the layers not connectable by welding.

19. The process of making bags according to claim 18, wherein said treatment is applied to both layers facing a gap defined by said 2x4 layers of said film.

20. The process of making bags according to claim 18 or 19, wherein said treatment applied onto said layer or layers facing a gap defined by said 2x4 layers constitute electrostatic inactivation rendering said layers of film not connectable by welding.

21. The process of making bags according to any of the preceding claims, wherein said process further comprises the step of rolling up the processed film.

## Patentansprüche

1. Verfahren zur Herstellung von Beuteln aus einer rohrförmigen Folie (1), welches Verfahren die folgenden Schritte umfasst:
- Versorgung der rohrförmigen Folie (1) mit Seitenfalten (8),
- dann ein Falten der rohrförmigen Folie (1) über eine Längsachse (10) davon derart, dass die rohrförmige Folie (1) 2x4 Folienschichten bildet,
gefolgt von, in einer beliebigen Reihenfolge, den folgenden Schritten:
- Versorgung der rohrförmigen Folie (1) mit einer ersten Trennlinie (2) zum Definieren von Griffen des Beutels,
- Versorgung der rohrförmigen Folie (1) mit einer zweiten Trennlinie (3), die eine Durchtrennungslinie des Beutels bildet,
- Versorgung der rohrförmigen Folie (1) mit einer ersten Querschweißung (4), welche eine obere Endschweißung, der zweiten Trennlinie (3) voraus, und einer zweiten Querschweißung (5), die eine untere Endschweißung, hinter der zweiten Perforationslinie (3), bildet,
**dadurch gekennzeichnet, dass** das Verfahren ferner, nach dem Falten der rohrförmigen Folie (1) über eine Längsachse (10) und vor der Versorgung der rohrförmigen Folie (1) mit einer Querschweißung, den Schritt des Einfügens einer Sperre (6) zwischen den 2x4 Schichten der Folie umfasst, derart, dass vier Folienschichten auf einer ersten Seite der Sperre (6) angeordnet werden, und vier andere Schichten der Folie auf einer zweiten Seite der Sperre (6) angeordnet werden, wobei die Sperre (6) einer solchen Art ist, dass eine durch die Schweißung erhaltene Querschweißung die vier Folienschichten auf der ersten Seite der Sperre (6) nicht mit den anderen vier Schichten der Folie auf der zweiten Seite der Sperre (6) verbindet.

2. Verfahren zur Herstellung von Beuteln nach Anspruch 1, wobei die rohrförmige Folie (1) durch eine Mehrzahl von Stationen, die die Schritte nach Anspruch 1 durchführen, vorgeführt oder gefördert wird.

3. Verfahren zur Herstellung von Beuteln nach Anspruch 2, wobei die Sperre (6) ein Band bildet, welches zumindest teilweise durch eine Schweißstation bewegt wird.

4. Verfahren zur Herstellung von Beuteln nach Anspruch 3, wobei das Band ein Band mit abhäsiven Eigenschaften, wie beispielsweise Klettenband oder ähnliches, bildet.

5. Verfahren zur Herstellung von Beuteln nach einem der vorgehenden Ansprüche, wobei die Sperre (6) ein Band bildet, welches dazu ausgebildet ist, in einem Kreislauf zu zirkulieren.

6. Verfahren zur Herstellung von Beuteln nach einem der vorgehenden Ansprüche, wobei Detektionsmittel für die Erfassung einer Anzahl von Folienschichten, die auf einer Seite der Sperre angeordnet sind, vorgesehen sind.

7. Verfahren zur Herstellung von Beuteln nach Anspruch 6, wobei die Detektionsmittel Durchleuchtungsmittel bilden.

8. Verfahren zur Herstellung von Beuteln nach einem der vorgehenden Ansprüche, wobei die Sperre (6) nach der Beendigung der Schritte der Schweißung von der Folie (1) entfernt wird.

9. Verfahren zur Herstellung von Beuteln nach einem der vorgehenden Ansprüche, wobei das Bereitstellen der zweiten Trennlinie (3), die die Durchtrennungslinie (3) bildet, einen Teil der ersten Trennlinie (2), die Griffe des Beutels definiert, überlagert.

10. Verfahren zur Herstellung von Beuteln nach einem der vorgehenden Ansprüche, wobei sich die Folie (1) während des gesamten Verfahrens unter Beförderung befindet.

11. Verfahren zur Herstellung von Beuteln nach einem der vorgehenden Ansprüche, wobei das Falten der Folie (1) über eine Längsachse (10) einen V-Falz bildet.

12. Verfahren zur Herstellung von Beuteln nach einem oder mehreren der vorgehenden Ansprüche, wobei die Sperre (6) zusammen mit der Folie (1) durch eine Schweißstation befördert oder vorgeführt wird, in welcher die quere obere Endschweißung (4) vorgesehen wird.

13. Verfahren zur Herstellung von Beuteln nach einem der vorgehenden Ansprüche, wobei die Schweißung durch ein Schweißgerät durchgeführt wird, welches zumindest teilweise zusammen mit der Folie (1) befördert wird.

14. Verfahren zur Herstellung von Beuteln nach einem der vorgehenden Ansprüche, wobei das Verfahren ferner den Schritt des Entfernens eines Abschnitts von mehrschichtiger Folie (7) umfasst, welcher durch die erste Trennlinie (2), die Griffe des Beutels definiert, abgegrenzt wird.

15. Verfahren zur Herstellung von Beuteln nach einem der vorgehenden Ansprüche, wobei die Trennlinien (2, 3) Perforierungen bilden, die während eines Verfahrens zum Erzeugen einer Linie von Löchern erzeugt werden.

16. Verfahren zur Herstellung von Beuteln nach Anspruch 12, wobei die Perforierungen sich durch alle Schichten von Folie erstrecken.

17. Verfahren zur Herstellung von Beuteln nach einem der vorgehenden Ansprüche, wobei die zweite Trennlinie (3), die eine Durchtrennungslinie des Beutels bildet, im Wesentlichen quer zur Längsachse (10) ausgerichtet ist.

18. Verfahren zur Herstellung von Beuteln nach Anspruch 2, wobei die Sperre durch Behandlung von einer der Schichten, die einem durch die 2x4 Schichten der Folie definierten Spalt zugewandt ist, mit einer Behandlung erhalten wird, die bewirkt, dass die Schichten durch Schweißen nicht verbindbar sind.

19. Verfahren zur Herstellung von Beuteln nach Anspruch 18, wobei die Behandlung auf die beiden Schichten, die einem durch die 2x4 Schichten der Folie definierten Spalt zugewandt sind, aufgetragen wird.

20. Verfahren zur Herstellung von Beuteln nach Anspruch 18 oder 19, wobei die Behandlung, die auf die Schicht(en), die einem durch die 2x4 Schichten der Folie definierten Spalt zugewandt ist/sind, aufgetragen wird, eine elektrostatische Inaktivierung bildet, die bewirkt, dass die Schichten von Folie durch Schweißen nicht verbindbar sind.

21. Verfahren zur Herstellung von Beuteln nach einem der vorgehenden Ansprüche, wobei das Verfahren ferner den Schritt des Aufwickelns der verarbeiteten Folie umfasst.

## Revendications

1. Procédé de fabrication de sacs à partir d'un film tubulaire (1), ledit procédé comprenant les étapes consistant à:
- la fourniture dudit film tubulaire (1) avec des soufflets latéraux (8),
- puis le pliage dudit film tubulaire (1) sur un axe longitudinal (10) de celui-ci si bien que ledit film tubulaire (1) constitue 2x4 couches de film, suivies, dans une séquence arbitraire, par les étapes consistant à:
- la fourniture dudit film tubulaire (1) avec une première ligne de séparation (2) pour définir des poignées dudit sac,
- la fourniture dudit film tubulaire (1) avec une deuxième ligne de séparation (3), formant une ligne de rupture dudit sac,
- la fourniture dudit film tubulaire (1) avec une première soudure transversale (4), constituant une extrémité supérieure de soudure, avant ladite deuxième ligne de séparation (3), et une deuxième soudure transversale (5), constituant une extrémité inférieure de soudure, derrière ladite deuxième ligne de perforation (3),
**caractérisé en ce que** ledit procédé comporte en outre une étape consistant à, après le pliage dudit film tubulaire (1) sur un axe longitudinal (10) et avant de fournir ledit film tubulaire (1) avec une soudure transversale, interposer entre lesdites 2x4 couches dudit film une barrière (6) si bien que quatre couches de film sont disposées sur un premier côté de ladite barrière (6) et quatre autres couches dudit film sont disposées sur un deuxième côté de ladite barrière (6), ladite barrière (6) étant telle qu'une soudure transversale obtenue par ledit soudage ne relie pas les quatre couches de film sur le premier côté de ladite barrière (6) avec les quatre autres couches dudit film sur le deuxième côté de ladite barrière (6).

2. Procédé de fabrication de sacs selon la revendication 1, dans lequel ledit film tubulaire (1) est avancé ou transporté à travers une pluralité de stations qui accomplissent les étapes selon la revendication 1.

3. Procédé de fabrication de sacs selon la revendication 2, dans lequel ladite barrière (6) constitue une bande étant déplacée au moins partiellement à travers un poste de soudage.

4. Procédé de fabrication de sacs selon la revendication 3, dans lequel ladite bande constitue une bande comprenant propriétés anti-adhérentes comme du ruban téflon ou équivalent.

5. Procédé de fabrication de sacs selon l'une quelconque des revendications précédentes, dans lequel ladite barrière (6) constitue une bande agencée de manière à circuler dans une boucle.

6. Procédé de fabrication de sacs selon l'une quelconque des revendications précédentes, dans lequel les moyens de détection sont pourvus pour l'enregistrement d'un nombre de couches de film disposées sur l'un côté de ladite barrière.

7. Procédé de fabrication de sacs selon la revendication 6, dans lequel les moyens de détection constituent des moyens de transillumination.

8. Procédé de fabrication de sacs selon l'une quelconque des revendications précédentes, dans lequel ladite barrière (6) est, après la finalisation desdites étapes de soudage, retirée dudit film (1).

9. Procédé de fabrication de sacs selon l'une quelconque des revendications précédentes, dans lequel ladite fourniture de ladite deuxième ligne de séparation (3) formant ladite ligne de rupture (3) est recouvrant une partie de ladite première ligne de séparation (2) définissant des poignées dudit sac.

10. Procédé de fabrication de sacs selon l'une quelconque des revendications précédentes, dans lequel ledit film (1) lors de l'ensemble du procédé est en cours de transport.

11. Procédé de fabrication de sacs selon l'une quelconque des revendications précédentes, dans lequel ledit pliage dudit film (1) sur un axe longitudinal (10) constitue un pli en V.

12. Procédé de fabrication de sacs selon l'une quelconque des revendications précédentes, dans lequel ladite barrière (6) est transportée ou avancée en même temps que ledit film (1) à travers une station de soudage dans laquelle ladite extrémité supérieure transversale de soudure (4) est pourvue.

13. Procédé de fabrication de sacs selon l'une quelconque des revendications précédentes, dans lequel ledit soudage est réalisé par un appareil de soudure qui est au moins partiellement transporté en même temps que ledit film (1).

14. Procédé de fabrication de sacs selon l'une quelconque des revendications précédentes, dans lequel le procédé en outre comprend l'étape consistant à enlever une partie de film multicouche (7) exposée par ladite première ligne de séparation (2) définissant des poignées dudit sac.

15. Procédé de fabrication de sacs selon l'une quelconque des revendications précédentes, dans lequel lesdites lignes de séparation (2), (3) constituent des perforations produites lors d'un procédé de fabrication d'une ligne de trous.

16. Procédé de fabrication de sacs selon la revendication 12, dans lequel lesdites perforations passent à travers toutes les couches du film.

17. Procédé de fabrication de sacs selon l'une quelconque des revendications précédentes, dans lequel ladite ligne de séparation (3), formant une ligne de rupture dudit sac, est orientée essentiellement transversalement audit axe longitudinal (10).

18. Procédé de fabrication de sacs selon la revendication 2, dans lequel ladite barrière est obtenue en traitant l'une des couches faisant face à un espace défini par lesdites 2x4 couches dudit film avec un traitement rendant les couches incapables d'être reliées par soudage.

19. Procédé de fabrication de sacs selon la revendication 18, dans lequel ledit traitement est appliqué aux deux couches faisant face à un espace défini par lesdites 2x4 couches dudit film.

20. Procédé de fabrication de sacs selon la revendication 18 ou 19, dans lequel ledit traitement appliqué à ladite couche ou auxdites couches faisant face à un espace défini par lesdites 2x4 couches dudit film constitue une inactivation électrostatique rendant lesdites couches de film incapables d'être reliées par soudage.

21. Procédé de fabrication de sacs selon l'une quelconque des revendications précédentes, dans lequel ledit procédé en outre comprend l'étape consistant à enrouler le film traité.
